# EUROPÄISCHE PATENTSCHRIFT

(11) **EP 2 389 295 B1**
(45) Veröffentlichungstag und Bekanntmachung des Hinweises auf die Patenterteilung: **11.06.2014**
(21) Anmeldenummer: 10700565.4
(22) Anmeldetag: 19.01.2010
(51) Int. Cl.: B60C 1/00, C08K 5/548

(54) **SILANHALTIGE KAUTSCHUKMISCHUNGEN MIT GEGEBENENFALLS FUNKTIONALISIERTEN DIENKAUTSCHUKEN UND MIKROGELEN, EIN VERFAHREN ZUR HERSTELLUNG UND DEREN VERWENDUNG**
RUBBER MIXTURES CONTAINING SILANE AND HAVING POSSIBLY FUNCTIONALIZED DIENE RUBBERS AND MICROGELS, A METHOD FOR THE PRODUCTION THEREOF, AND USE THEREOF
MÉLANGES DE CAOUTCHOUCS CONTENANT DU SILANE, PRÉSENTANT ÉVENTUELLEMENT DES CAOUTCHOUCS DIÉNIQUES FONCTIONNALISÉS ET DES MICROGELS, LEUR PROCÉDÉ DE PRODUCTION ET LEUR UTILISATION

(30) Priorität: 22.01.2009 DE 102009005713
(43) Veröffentlichungstag der Anmeldung: 30.11.2011
(73) Patentinhaber: LANXESS Deutschland GmbH, 50569 Köln (DE)
(72) Erfinder: STEINHAUSER, Norbert, 40789 Monheim (DE); OBRECHT, Werner, 47447 Moers (DE); HARDY, David, 41541 Dormagen (DE); GROSS, Thomas, 42489 Wülfrath (DE)
(86) Internationale Anmeldenummer: PCT/EP2010/050571
(87) Internationale Veröffentlichungsnummer: WO 2010/084114

(56) Entgegenhaltungen:
- EP-A1- 1 285 926
- EP-A1- 1 559 586
- WO-A1-2008/142897
- WO-A2-02/31040
- DE-A1-102007 020 451
- NIEDERMEIER W. ; SCHWAIGER B.: "Performance enhancement in rubber by modern filler systems" KGK. KAUTSCHUK, GUMMI, KUNSTSTOFFE, Bd. 60, Nr. 4, 1. April 2007 (2007-04-01), - 30. April 2007 (2007-04-30) Seiten 184-187, XP002574550 ISSN: 0948-3276

## Beschreibung

Die Erfindung betrifft silanhaltige Kautschukmischungen mit funktionalisierten Dienkautschuken und Mikrogelen, ein Verfahren zur Herstellung und deren Verwendung für die Herstellung nassrutschfester und rollwiderstandsarmer Kfz-Reifenlaufflächen mit hohem Abriebwiderstand.

Bei Reifenlaufflächen werden als wichtige Eigenschaften eine gute Haftung auf trockener und nasser Oberfläche sowie ein hoher Abriebwiderstand angestrebt. Dabei ist es sehr schwer, die Rutschfestigkeit eines Reifens zu verbessern, ohne gleichzeitig den Rollwiderstand und die Abriebbeständigkeit zu verschlechtern. Ein niedriger Rollwiderstand ist für einen niedrigen Kraftstoffverbrauch von Bedeutung, und eine hohe Abriebbeständigkeit ist der entscheidende Faktor für eine hohe Lebensdauer des Reifens.

Nassrutschfestigkeit und Rollwiderstand einer Reifenlauffläche hängen zum großen Teil von den dynamisch-mechanischen Eigenschaften der Kautschuke ab, die bei der Mischungsherstellung verwendet werden. Zur Erniedrigung des Rollwiderstands werden für die Reifenlauffläche Kautschuke mit einer hohen Rückprallelastizität bei höheren Temperaturen (60°C bis 100°C) eingesetzt. Andererseits sind zur Verbesserung der Nassrutschfestigkeit Kautschuke mit einem hohen Dämpfungsfaktor bei niedrigen Temperaturen (0 bis 23°C) bzw. niedriger Rückprallelastizität im Bereich 0°C bis 23°C von Vorteil. Um dieses komplexe Anforderungsprofil zu erfüllen, werden Mischungen aus verschiedenen Kautschuken in der Lauffläche eingesetzt. Für gewöhnlich werden Mischungen aus einem oder mehreren Kautschuken mit einer relativ hohen Glasübergangstemperatur, wie Styrol-Butadien-Kautschuk, und einem oder mehreren Kautschuken mit relativ niedriger Glasübergangstemperatur, wie Polybutadien mit einem hohen 1,4-cis-Gehalt bzw. einem Styrol-Butadien-Kautschuk mit niedrigem Styrol- und geringem Vinylgehalt oder einem in Lösung hergestellten Polybutadien mit mittlerem 1,4-cis- und niedrigem Vinylgehalt verwendet.

Doppelbindungshaltige anionisch polymerisierte Lösungskautschuke, wie Lösungs-Polybutadien und Lösungs-Styrol-Butadien-Kautschuke, besitzen gegenüber entsprechende Emulsionskautschuken Vorteile bei der Herstellung rollwiderstandsarmer Reifenlaufflächen. Die Vorteile liegen u.a. in der Steuerbarkeit des Vinylgehalts und der damit verbundenen Glasübergangstemperatur und der Molekülverzweigung. Hieraus ergeben sich in der praktischen Anwendung besondere Vorteile in der Relation von Nassrutschfestigkeit und Rollwiderstand des Reifens. So beschreibt US-PS 5 227 425 die Herstellung von Reifenlaufflächen aus einem Lösungs-SBR und Kieselsäure (Silica). Zur weiteren Verbesserung der Eigenschaften sind zahlreiche Methoden zur Endgruppenmodifizierung entwickelt worden, wie z.B. in EP-A 334 042 beschrieben mit Dimethylaminopropylacrylamid oder wie in EP-A 447 066 beschrieben mit Silylethern. Durch das hohe Molekulargewicht der Kautschuke ist der Gewichtsanteil der Endgruppen jedoch gering, und diese können daher die Wechselwirkung zwischen Füllstoff und Kautschukmolekül nur wenig beeinflussen. Aus EP-A 1 000 971 sind höherfunktionalisierte carboxylgruppenhaltige Copolymere aus Vinylaromaten und Dienen bekannt mit einem Gehalt an 1,2-gebundenem Dien (Vinylgehalt) bis 60 %. Copolymere aus Dien und funktionalisierten vinylaromatischen Monomeren sind in US 2005/0 256 284 A1 beschrieben. Der Nachteil dieser Copolymere liegt in der aufwändigen Synthese der funktionalisierten vinylaromatischen Monomere und der starken Einschränkung bei der Auswahl der funktionellen Gruppen, da nur solche funktionellen Gruppen zum Einsatz kommen können, die bei der anionischen Polymerisation keine Reaktion mit dem Initiator eingehen. Insbesonders solche funktionellen Gruppen, die Wasserstoffatome aufweisen, die zur Ausbildung von Wasserstoffbrückenbindungen fähig sind und damit in der Kautschukmischung besonders vorteilhafte Wechselwirkungen mit dem Füllstoff auszubilden vermögen, können weder durch anionische noch durch Ziegler/Natta-Polymerisation in das Polymere eingebaut werden.

Zur Reduktion des Rollwiderstands von Reifen sind in der Literatur eine Vielzahl von Maßnahmen beschrieben worden u.a. auch die Verwendung von Polychloroprengelen (EP-A 405 216) und Polybutadiengelen (DE-A 42 20 563) in Reifenlaufflächen aus C=C-Doppelbindungen enthaltenden Kautschuken. Nachteile bei der Verwendung von Polychloropren-Gel ergeben sich aus dem hohen Kautschukpreis, der hohen Dichte des Polychloroprens und den beim Recyclingprozeß von Altreifen zu erwartenden ökologischen Nachteilen wegen der chlorhaltigen Komponente. Polybutadiengele gemäß DE-A 42 20 563 zeigen diese Nachteile nicht, jedoch wird hier die dynamische Dämpfung sowohl bei tiefen Temperaturen (-20 bis +20°C) als auch bei höheren Temperaturen (40-80°C) gesenkt, was in der Praxis neben Rollwiderstandsvorteilen zu Nachteilen im Nassrutschverhalten der Reifen führt. Schwefelvernetzte Kautschukgele gemäß GB-PS 1 078 400 zeigen keine verstärkende Wirkung und sind daher für die vorliegende Anwendung ungeeignet.

Demgegenüber verfügen die in DE 102008052116.7 beschriebenen Mikrogel-haltigen (Styrol/Butadien-Kautschukgel-haltige) funktionalisierten Gummimischungen bereits über ein besseres Eigenschaftsprofil, das jedoch noch weiter zu optimieren ist.

In EP 1285926 A1 werden nicht funktionalisierte Dienkautschuke mit einem Silan in einer Kautschukmischung eingesetzt.

In DE 102007020451 A1 werden Mikrogel-haltige Kautschukmischungen offenbart, in denen ebenfalls nicht funktionalisierte Dienkautschuke eingesetzt wurden.

In EP 1559586 A1 wird ein SBR-Komposit beschrieben, wobei dieses Komposit aus einem Styrolbutadiencopolymer, einem über ein Siliciumatom Alkoxy-funktionalisierten Styrolbutadiencopolymer, einem mit einer Kieselsäure und Ruß verstärkten Additiv, einem Styrolcopolymerharz und einem Kupplungsreagenz besteht.

Es bestand daher die Aufgabe, Kautschukmischungen bereitzustellen, die die Nachteile des Standes der Technik nicht aufweisen und über ein verbessertes Eigenschaftsprofil verfügen.

Es wurde jetzt überraschend gefunden, dass die erfindungsgemäßen Kautschukmischungen, enthaltend (A) mindestens einen funktionalisierten Dienkautschuk, wobei der Dienkautschuk aus Wiederholungseinheiten auf Basis von 1,3-Butadien und Styrol besteht und mit Hydroxy- und/ oder Carboxylgruppen und/ oder deren Salzen funktionalisiert ist und (B) gegebenenfalls ein Styrol/Butadien-Kautschukgel mit einem Quellungsindex in Toluol von 1 bis 25 und einer Teilchengröße von 5 bis 1000 nm sowie (C) mindestens ein spezielles Silan und (D) gegebenenfalls weitere Kautschuke, Füllstoffe und Kautschukhilfsmittel eine hohe dynamische Dämpfung bei niedriger Temperatur und eine geringe dynamische Dämpfung bei höherer Temperatur besitzen, so dass sich sowohl Vorteile im Rollwiderstand als auch im Nassrutschverhalten sowie in Bezug auf den Abrieb ergeben.

Gegenstand der Erfindung sind daher Kautschukmischungen, enthaltend (A) mindestens einen funktionalisierten Dienkautschuk, wobei der Dienkautschuk aus Wiederholungseinheiten auf Basis von 1,3-Butadien und Styrol besteht und mit Hydroxy- und/oder Carboxylgruppen und/ oder deren Salzen funktionalisiert ist und (B) gegebenenfalls ein Styrol/Butadien-Kautschukgel mit einem Quellungsindex in Toluol von 1 bis 25 und einer Teilchengröße von 5 bis 1000 nm sowie (C) ein Silan der Formel (I) 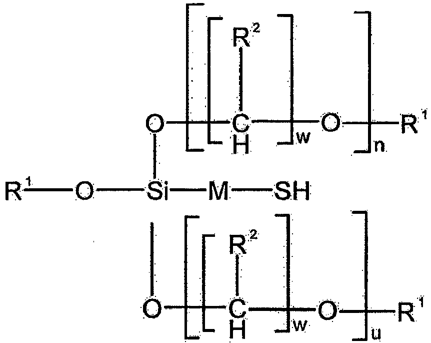 mit R¹=Wasserstoff bzw. ein Kohlenwasserstoffrest mit 1 bis 20 C-Atomen, der linear, verzweigt, aliphatisch, cycloaliphatisch und aromatisch sein kann und gegebenenfalls weitere Heteratome, wie z.B. Sauersoff, Stickstoff und/oder Schwefel, enthalten kann,
R² = Wasserstoff oder Methyl
und M ein Spacer, der einen Kohlenwasserstoffrest mit 1 bis 20 Kohlenstoffatomen darstellt, der linear, verzweigt, aliphatisch, cycloaliphatisch und aromatisch sein kann und gegebenenfalls weitere Heteratome, wie z.B. Sauerstoff, Stickstoff und/oder Schwefel enthalten kann und
n = 0 bis 25,
u= 0 bis 25,
w = 1 bis 40, vorzugsweise 2-20, ganz besonders bevorzugt 2,
R¹, R² und/oder w innerhalb des Silans gleich oder verschieden sein können,
und (D) gegebenenfalls weitere Kautschuke, Füllstoffe und Kautschukhilfsmittel.

In dem funktionatisierten Dienkautschuk (A) ist das Dien1,3-Butadien.

Vinylaromatisches Monomer im Sinne der Erfindung ist Styrol.

Funktionelle Gruppen im funktionalisierten Dienkautschuk sind Carboxyl- und /oder Hydroxygruppen und/oder deren Salze. Als Salze sind bevorzugt Alkali-, Erdalkali-, Zink- und Ammoniumcarboxylate sowie Alkali-, Erdalkali-, Zink- und Ammoniumsulfonate.

In der Erfindung ist (A) ein funktionalisierter Dienkautschuk aus Wiederholungseinheiten auf Basis von 1,3- Butadien und Styrol, der mit Hydroxy- und/oder Carbonylgruppen funktionalisiert ist.

Die funktionalisierten Dienkautschuke (A) werden dabei vorzugsweise durch Polymerisation von 1,3-Butadien und Styrol in Lösung nach dem im Stand der Technik bekannten Verfahren und anschließender Einführung von funktionellen Gruppen hergestellt, wie z.B. in DE 102008023885.6 beschrieben.

Unter Styrol/Butadien-Kautschukgelen (B) werden Mikrogele verstanden, hergestellt durch Vernetzung von
- SBR -: Styrol/Butadien-Copolymerisaten mit Styrolgehalten von 0 bis 100 Gew.-%, vorzugsweise 10 bis 60 Gew.-%, und/oder
- XSBR -: Styrol/Butadien-Copolymerisaten und Pfropfpolymerisaten mit weiteren polaren ungesättigten Monomeren, wie Acrylsäure, Methacrylsäure, Acrylamid, Methacrylamid, N-Methoxymethylmethacrylsäureamid, N-Acetoxymethylmethacrylsäureamid, Acrylnitril, Dimethylacrylamid, Hydroxyethylacrylat Hydroxypropylacrylat, Hydroxybutylacrylat, Hydroxyethylmethacrylat, Hydroxypropylmethacrylat Hydroxybutylmethacrylat, Ethylenglycoldimethacrylat, Butandioldimethacrylat, Trimethylolpropantrimethacrylat, Pentaerythrittetramethacrylat mit Stytolgehalten von 0 bis 99 Gew.-% und Gehalten an einpolymerisierten polaren Monomeren von 1 bis 25 Gew.-%.

Bei den Styrol/Butadien-Kautschukgelen (B) sind XSBR-Styrol/Butadien-Copolymerisate und Pfropfpolymerisate enthaltend Hydroxyethylmethacrylat, Hydroxypropylmethacrylat, Hydroxybutylmethacrylat, Ethylenglykoldimethacrylat, Trimethylolpropantrimethacrylat und/oder Pentaerythrittetramethacrylat als polare ungesättigte Monomere besonders bevorzugt.

Der Begriff Copolymerisate umfasst auch die Polymerisate, die aus 2 oder mehr Monomeren bestehen.

Dabei werden z.B. auch solche Mikorgele umfasst, die durch Copolymeristion der Monomeren Butadien, Styrol, Trimethylopropantrimethacrylat und Hydroxyethylmethacrylat in Emulsion erhalten werden.

Desweiteren werden Mikorgele umfasst, die in EP-A 1935926 beschrieben sind.

Die Styrol/Butadien-Kautschukgele besitzen eine Teilchengröße von 5 bis 1000, bevorzugt 20-400 nm (DVN-Wert nach DIN 53 206) und Quellungsindizes (Qᵢ) in Toluol von 1 bis 25, vorzugsweise 1 bis 20. Der Quellungsindex wird aus dem Gewicht des lösungsmittelhaltigen Gels (nach Zentrifugation mit 20.000 Upm) und dem Gewicht des trockenen Gels berechnet:
Qᵢ Naßgewicht des Gels/Trockengewicht des Gels.

Zur Ermittlung des Quellungsindex lässt man z.B. 250 mg SBR-Gel in 25 ml Toluol 24 Stunden unter Schütteln quellen. Das Gel wird abzentrifugiert und gewogen und anschließend bei 70°C bis zur Gewichtskonstanz getrocknet und nochmals gewogen.

In einer bevorzugen Ausführungsform handelt es sich bei den Styrol/Butadien-Kautschukgelen (B) um XSBR-Styrol/Butadien-Copolymerisate mit einem Gehalt an Hydroxygruppen von 20 bis 50 mg KOH/g. Der Hydroxylgruppengehalt der Styrol/Butadien-Kautschukgele (B) wird dabei durch Umsetzung mit Acetanhydrid und Titration der hierbei frei werdenden Essigsäure mit KOH nach DIN 53240 als Hydroxyl-Zahl mit der Dimension mg KOH/g Polymer bestimmt.

Die Herstellung der Styrol/Butadien-Kautschuk-Ausgangsprodukte ist dem Fachmann bekannt und erfolgt bevorzugt durch Emulsionspolymerisation. In diesem Zusammenhang wird beispielsweise auf I. Franta, Elastomers and Rubber Compounding Materials, Elesevier, Amsterdam 1989, Seite 88 bis 92 verwiesen..

Die Vernetzung der Kautschuk-Ausgangsprodukte zu Styrol/Butadien-Kautschukgelen (B) erfolgt im Latexzustand und kann einerseits während der Polymerisation durch Copolymerisation mit mehrfunktionellen Monomeren, Fortführurng der Polymerisation bis zu höhen Umsätzen oder im Monomerzulaufverfahren durch Polymerisation bei hohen internen Umsätzen erfolgen oder im Anschluß an die Polymerisation durch Nachvernetzung oder auch durch die Kombination beider Prozesse durchgeführt werden. Auch die Herstellung durch Polymerisation in Anwesenheit von Reglern, wie z.B. Thiolen, ist möglich.

Bei Vernetzung des Styrol/Butadien-Kautschuks durch Copolymerisation mit vernetzend wirkenden multifunktionellen Verbindungen werden bevorzugt multifunktionelle Comonomere mit mindestens zwei, vorzugsweise 2 bis 4, copolymerisierbaren C=C-Doppelbindungen, wie Diisopropenylbenzol, Divinylbenzol, Divinylether, Divinylsulfon, Diallylphthalat, Triallylcyanurat, Triallylisocyanurat, 1,2-Polybutadien, N,N'-m-Phenylenmaleinimid und/oder Triallyltrimellitat eingesetzt. Darüber hinaus kommen z.B. in Betracht: die Acrylate und Methacrylate von mehrwertigen, vorzugsweise 2 bis 4-wertigen, C₂-C₁₀-Alkoholen, wie Ethylenglykol, Propandiol-1,2, Butandiol, Hexandiol, Polyethylenglykol mit 2 bis 20, vorzugsweise 2 bis 8 Oxyethyleneinheiten, Neopentylglykol, Bisphenol A, Glycerin, Trimethylolpropan, Pentaerythrit, Sorbit und ungesättigte Polyester aus aliphatischen Di- und Polyolen sowie Maleinsäure, Fumarsäure und/oder Itaconsäure. Die multifunktionellen Verbindungen werden vorzugsweise in Mengen von 0,5 bis 15 Gew.-%, besonders bevorzugt 1 - 10 Gew.-%, bezogen auf die gesamte Monomermischung eingesetzt.

Die Vernetzung der Styrol/Butadien-Kautschuke zu SBR-Kautschukgelen kann auch in Latexform durch Nachvernetzung mit vernetzend wirkenden Chemikalien erfolgen. Geeignete vernetzend wirkende Chemikalien sind beispielsweise organische Peroxide, z.B. Dicumylperoxid, t-Butylcumylperoxid, Bis-(t-butylperoxyisopropyl)benzol, Di-t-butylperoxid, Dibenzoylperoxid, Bis-(2,4-dichlorbenzoyl)peroxid, t-Butylperbenzoat, sowie organische Azoverbindungen, wie Azobisisobutyronitril und Azobiscyclohexannitril, sowie Di- und Polymercaptoverbindungen, wie Dimercaptoethan, 1,6-Dimercaptohexan, 1,3,5-Trimercaptotriazin, und Mercapto-terminierte Polysulfidkautschuke, wie Mercapto-terminierte Umsetzungsprodukte von Bis-chlorethylformal mit Natriumpolysulfid. Die optimale Temperatur zur Durchführung der Nachvernetzung ist naturgemäß von der Reaktivität des Vernetzers abhängig und kann bei Temperaturen von Raumtemperatur bis ca. 170°C gegebenenfalls unter erhöhtem Druck durchgeführt werden. Siehe hierzu Houben-Weyl, Methoden der organischen Chemie, 4. Auflage, Bd. 14/2, Seite 848. Besonders bevorzugte Vernetzungsmittel sind Peroxide. In diesem Zusammenhang wird beispielhaft auf EP-A 1 307 504 verwiesen.

Vor, während oder nach der Nachvernetzung in Latexform kann gegebenenfalls auch eine Teilchenvergrößerung durch Agglomeration durchgeführt werden.

Auch Styrol/Butadien-Kautschuke, die in organischen Lösungsmitteln hergestellt wurden, können als Ausgangsprodukte zur Herstellung der Styrol/Butadien-Kautschukgele dienen. In diesem Fall empfiehlt es sich, die Lösung des Kautschuks gegebenenfalls unter Zuhilfenahme eines Emulgators in Wasser zu emulgieren und die so erhaltene Emulsion vor oder nach der Entfernung des organischen Lösungsmittels mit geeigneten Vemetzem nachträglich zu vernetzen. Als Vernetzer eignen sich die zuvor genannten Vernetzer.

In einer bevorzugten Ausführungsform der Erfindung beträgt der Anteil des Styrol/Butadien-Kautschukgels (B), bezogen auf 100 Gewichtsteile der Gesamtmenge an Kautschuk 5 bis 75 Gew.-Teile.

Als Silan (C) eignen sich Verbindungen mit folgender allgemeinen Formel (I) 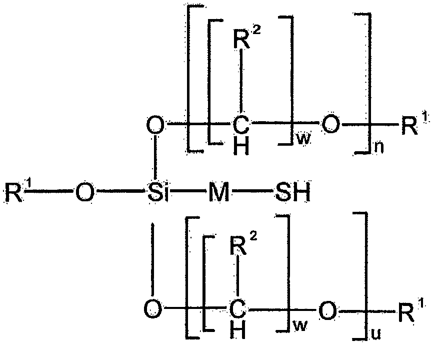 mit R¹= Wasserstoff, bzw. ein Kohlenwasserstoffrest mit 1 bis 20 C-Atomen, der linear, verzweigt, aliphatisch, cycloaliphatisch und aromatisch sein kann und gegebenenfalls weitere Heteratome, wie z.B. Sauerstoff, Stickstoff und/oder Schwefel, enthalten kann,
bevorzugt ist R¹ = C₁-C₁₅-Alkyl,
R² = Wasserstoff oder Methyl und M = ein Spacer, der einen Kohlenwasserstoffrest darstellt, der aus 1 bis 20 Kohlenstoffatomen besteht und linear, verzweigt, aliphatisch, cycloaliphatisch und aromatisch sein kann und gegebenenfalls weitere Heteratome, wie z.B. Sauerstoff, Stickstoff und/oder Schwefel, enthalten kann und
n = 0 bis 25, vorzugsweise 3-10,
u= 0 bis 25,
w = 1 bis 40, vorzugsweise 2-20, ganz besonders bevorzugt 2,
und R¹, R² und/oder w innerhalb des Moleküls gleich oder verschieden sein können,

Besonders bevorzugt wird als Silan (C) die Verbindung der Formel (II) eingesetzt. 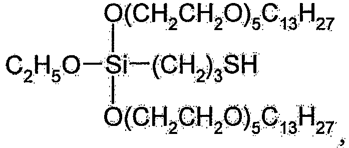 einzeln oder gegebenenfalls im Gemisch mit den vorgenannten oder anderen handelsüblichen Silanen.

Bei Einsatz des Silans der Formel (II) ist die Kombination mit einem funktionalisierten Dienkautschuk (A), in Anwesenheit eines Kautschukgel (B) in Anwesenheit der Komponente (D) bevorzugt.

Das Silan (C) wird zweckmäßig in Gesamtmengen von 0,2 phr bis 15 phr, bezogen auf 100 Gewichts-Teile Gesamtkautschuke eingesetzt. In den Fällen, in denen das Silan der Formel (I) mit anderen handelsüblichen Silanen eingesetzt wird, ist das Silan der Formel (I) vorzugsweise zu mindestens 50% in dem Silangemisch vertreten.

Die Silane der Formel (I) sind nach im Stand der Technik bekannten Verfahren herstellbar, wie z.B. beschrieben in WO2007/068555 oder EP-A-1285926.

Bei dem Silan der Formel (II) handelt es sich um ein handelsübliches Produkt, das beispielsweise bei der Evonik Industries AG/Evonik Degussa GmbH erhältlich ist (siehe auch http://www.degussa-fp.de/fp/de/gesch/gummisilane/default.htm?Product=366).

Besonders bevorzugt sind dabei die folgenden Kombinationen aus
a) mindestens einem funktionalisierten Styrol/Butadien-Kautschuk mit mindestens einem Silan der Formel (II) (siehe erfindungsgemäßes Beispiel 3*) oder
b) mindestens einem funktionalisierten Styrol-Butadien-Kautschuk mit mindestens einem Mikrogel und mindestens einem Silan der Formel (II) (siehe erfindungsgemäßes Beispiel 4*).

Die erfindungsgemäßen Kautschukmischungen können neben den erwähnten funktionalisierten Dienkautschuken (A) und dem Styrol/Butadien-Kautschukgel (B) als Komponente (D) noch andere Kautschuke enthalten, wie Naturkautschuk oder auch andere Synthesekautschuke. Sofern vorhanden liegt deren Menge üblicherweise im Bereich von 0,5 bis 85, bevorzugt 10 bis 75 phr, bezogen auf die gesamte Kautschukmenge in der Kautschukmischung. Die Menge an zusätzlich zugegebenen Kautschuken richtet sich wieder nach dem jeweiligen Verwendungszweck der erfindungsgemäßen Kautschukmischungen.

Zusätzliche Kautschuke sind beispielsweise Naturkautschuk sowie Synthesekautschuk.

Expemplarisch sind hier literaturbekannte Synthesekautschuke aufgeführt. Sie umfassen u.a.
- BR: - Polybutadien
- ABR: - Butadien/Acrylsäure-C₁-C₄-Alkylester-Copolymere
- IR: - Polyisopren
- E-SBR: - Styrol-Butadien-Copolymerisate mit Styrolgehalten von 1-60, vorzugsweise 20-50 Gew.-%, hergestellt durch Emulsionspolymerisation
- IIR: - Isobutylen-Isopren-Copolymerisate
- NBR: - Butadien-Acrylnitril-Copolymere mit Acrylnitrilgehalten von 5-60, vorzugsweise 10-40 Gew.-%
- HNBR: - teilhydrierter oder vollständig hydrierter NBR-Kautschuk
- EPDM: - Ethylen-Propylen-Dien-Terpolymerisate
sowie Mischungen dieser Kautschuke. Für die Herstellung von Kfz-Reifen sind insbesondere Naturkautschuk, E-SBR sowie Lösungs-SBR, Polybutadienkautschuk mit hohem cis-Gehalt (> 90%), der mit Katalysatoren auf Basis Ni, Co, Ti oder Nd hergestellt wurde, sowie Polybutadienkautschuk mit einem Vinylgehalt von bis zu 80 % sowie deren Mischungen von Interesse.

Als Füllstoffe kommen für die erfindungsgemäßen Kautschukmischungen alle bekannten in der Kautschukindustrie verwendeten Füllstoffe in Betracht. Diese umfassen sowohl aktive als auch inaktive Füllstoffe.

Zu erwähnen sind beispielhaft:
- hochdisperse Kieselsäuren, hergestellt z.B. durch Fällung von Silikaten mit Säuren oder Flammenhydrolyse von Siliciumhalogeniden mit spezifischen Oberflächen von 5-1000, vorzugsweise 20-400 m²/g (BET-Oberfläche) und mit Primärteilehengrößen von 10-400 nm. Die Kieselsäuren können gegebenenfalls auch als Mischoxide mit anderen Metalloxiden, wie Al-, Mg-, Ca-, Ba-, Zn-, Zr-, Ti-Oxiden vorliegen;
- synthetische Silikate, wie Aluminiumsilikat, Erdalkalisilikat wie Magnesiumsilikat oder Calciumsilikat, mit BET-Oberflächen von 20-400 m²/g und Primärteilchendurchmessern von 10-400 nm;
- natürliche Silikate, wie Kaolin und andere natürlich vorkommende Kieselsäure;
- Glasfasern und Glasfaserprodukte (Matten, Stränge) oder Mikroglaskugeln;
- Metalloxide, wie Zinkoxid, Calciumoxid, Magnesiumoxid, Aluminiumoxid;
- Metallcarbonate, wie Magnesiumcarbonat, Calciumcarbonat, Zinkcarbonat;
- Metallhydroxide, wie z.B. Aluminiumhydroxid, Magnesiumhydroxid;
- Metallsulfate, wie Calciumsulfat, Bariumsulfat;
- Ruße: Die hierbei zu verwendenden Ruße sind nach dem Flammruß-, dem Channel-, Furnace-, Gasruß-, Thermal-, Acetylenruß- oder Lichtbogenverfahren hergestellte Ruße und besitzen BET-Oberflächen von 9 - 200 m²/g, z.B. SAF-, ISAF-LS-, ISAF-HM-, ISAF-LM-, ISAF-HS-, CF-, SCF-, HAF-LS-, HAF-, HAF-HS-, FF-HS-, SPF-, XCF-, FEF-LS-, FEF-, FEF-HS-, GPF-HS-, GPF-, APF-, SRF-LS-, SRF-LM-, SRF-HS-, SRF-HM- und MT-Ruße bzw. nach ASTM N110-, N219-, N220-, N231-, N234-, N242-, N294-, N326-, N327-, N330-, N332-, N339-, N347-, N351-, N356-, N358-, N375-, N472-, N539-, N550-, N568-, N 650-, N660-, N754-, N762-, N 765-, N774-, N787- und N990-Ruße.
- Kautschukgele, insbesondere solche auf Basis Polybutadien und/oder Polychloropren mit Teilchengrößen von 5 bis 1000 nm.

Bevorzugt werden als Füllstoffe hochdisperse Kieselsäuren und/oder Ruße eingesetzt.

Die genannten Füllstoffe können alleine oder im Gemisch eingesetzt werden. In einer besonders bevorzugten Ausführungsform enthalten die Kautschukmischungen als Füllstofffe ein Gemisch aus hellen Füllstoffen, wie hochdispersen Kieselsäuren, und Rußen, wobei das Mischungsverhältnis von hellen Füllstoffen zu Rußen bei 0,01 :1 bis 50:1 bevorzugt 0,05:1 bis 20:1 liegt.

Die Füllstoffe werden hierbei in Mengen im Bereich von 1 0 bis 500 Gew.-Teile bezogen auf 100 Gew.-Teile Kautschuk eingesetzt. Bevorzugt werden 20 bis 200 Gew.-Teile eingesetzt.

In einer weiteren Ausführungsform der Erfindung enthalten die Kautschukmischungen noch Kautschukhilfsmittel, die beispielsweise die Verarbeitungseigenschaften der Kautschukmischungen verbessern, der Vernetzung der Kautschukmischungen dienen, die physikalischen Eigenschaften der aus den erfindungsgemäßen Kautschukmischungen hergestellten Vulkanisate für deren speziellen Einsatzzweck verbessern, die Wechselwirkung zwischen Kautschuk und Füllstoff verbessern oder zur Abbindung des Kautschuks an den Füllstoff dienen.

Kautschukhilfsmittel sind z.B. Vernetzeragentien, wie z.B. Schwefel oder Schwefel-liefernde Verbindungen, sowie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Silane, Verzögerer, Metalloxide, Strecköle, wie z.B. DAE (Distillate Aromatic Extract)-, TDAE (Treated Distillate Aromatic Extract)-, MES (Mild Extraction Solvates)-, RAE (Residual Aromatic Extract)-, TRAE (Treated Residual Aromatic Extract)-, naphthenische und schwere naphthenische Öle sowie Aktivatoren.

Die gesamte Menge an Kautschukhilfsmitteln liegt im Bereich von 1 bis 300 Gewichtsteilen, bezogen auf 100 Gewichtsteile an Gesamtkautschuk. Bevorzugt werden 5 bis 150 Gewichtsteile an Kautschukhilfsmitteln eingesetzt.

Ein weiterer Gegenstand der Erfindung ist ein Verfahren zur Herstellung der erfindungs-gemäßen Kautschukmischungen, wonach mindestens ein funktionalisierter Dienkautschuk mit gegebenenfalls mindestens einem Styrol/Butadien-Kautschukgel, einem Silan der Vormel (I) und gegebenenfalls weiteren Kautschuken, Füllstoffen und Kautsehukhilfsmitteln in den vorgenannten Mengen in einer Mischapparatur bei Temperaturen von 20 - 220°C vermischt werden.

Die Mischungsherstellung kann in einem einstufigen oder in einem mehrstufigen Verfahren erfolgen, wobei 2 bis 3 Mischstufen bevorzugt sind. Die Zugabe von Schwefel und Beschleuniger erfolgt bevorzugt in der letzten Mischstufe, z. B. auf einer Walze, wobei Temperaturen im Bereich 30 bis 90°C bevorzugt sind.

Für die Mischungsherstellung geeignete Aggregate sind beispielsweise Walzen, Kneter, hinenmischer oder Mischextruder.

Ein weiterer Gegenstand der Erfindung ist zudem die Verwendung der erfindungsgemäßen Kautschukmischungen zur Herstellung von Kautschukvulkanisaten, vor allein für die Herstellung von Reifen, insbesondere Reifenlaufflächen.

Die erfindungsgemäßen Kautschukmischungen eignen sich auch zur Herstellung von Formkörpern, z.B. für die Herstellung von Kabelmänteln, Schläuchen, Treibriemen, Förderbändern, Walzenbelägen, Schuhsohlen, Dichtungsringen und Dämpfungselementen.

Die nachfolgenden Beispiele dienen der Erläuterung der Erfindung, ohne dabei limitierend zu wirken.

### Beispiele

### Herstellung eines Styrol/Butadien-Kautschukgels

Für die Compoundstudie wurde ein Styrol/Butadien-Kautschukgel mit einer Tg = -15°C eingesetzt. Dieses Gel hat in Toluol einen unlöslichen Anteil von 95 Gew.-%. Der Quellungsindex in Toluol beträgt 7,4. Die Hydroxylzahl beträgt 32,8 mg KOH/g Gel.

Die Herstellung des Gels erfolgte durch 7-stündige Copolymerisation bei 30°C der nachfolgenden Monomermischung in Gegenwart von 300 Teilen (bezogen auf die angegebenen Monomerteile) Wasser, 4,5 Teilen Harzsäure, 0,1 Teilen para- Menthylhydroperoxid 0,07 Teilen Natriumethylendiamintetraacetat, 0,05 Teilen Eisensulfat-Heptahydrat und 0,15 Teilen Natriumformaldehydsulfoxylat als Initiator.

| **Monomere** | **Mengenanteile [Gew.-Teile]** |
|---|---|
| Butadien | 44,5 |
| Styrol | 46,5 |
| Trimethylolpropantrimethacrylat | 1,5 |
| Hydroxyethylmethacrylat | 7,5 |

Im Anschluss wurde die Mischung erwärmt, die Restmonomere durch Wasserdampfdestillation bei reduziertem Druck und einer Temperatur von 70°C entfernt. Dann wurden 2 Teile (bezogen auf 100 Teile Produkt) des Antioxidanz 2,2-Methylen-bis-(4-methyl-6-tert.-butylphenol) (CAS-Nr.: 119-47-1), bezogen auf 100 Teile Produkt, zugesetzt.

Danach wurde der Latex zu einer wässrigen Lösung von Natriumchlorid/Schwefelsäure gegeben, um die Koagulation herbeizuführen. Die Kautschukkrümel wurden abgetrennt, mit Wasser gewaschen und bei 50°C unter reduziertem Druck getrocknet.

Für die Käutschultinischung wurde als funktionalisierter Dienkautschuk ein Styrol-Butadienkautschuk (SBR) mit folgender Zusammensetzung eingesetzt:
Vinylgehalt: 46 Gewicht-%, bezogen auf ölfreien Kautschuk,
Styrolgehalt: 24,5 Gewichts-%, bezogen auf ölfreien Kautschuk,
Mooneyviskosität: 52 ME, bestimmt als ML1+4 (100°C) nach DIN 53 523,
Ölgehalt (TDAE-Öl): 29,1 Gewichts-%, bezogen auf ölverstreckten Kautschuk,
COOR-Funktionalität: 35 meq./kg.

Zum Vergleich wurde der nicht füntktionalisierte Styrol-Butadienkautsthuk BUNA VSL 5025-2, ein Produkt der Lanxess Deutschland GmbH (Lanxess), mit folgender Zusammensetzung eingesetzt:
Vinylgehalt: 46 Gewichts-%, bezogen auf ölfreien Kautschuk,
Styrolgehalt: 24 Gewichts-%, bezogen auf ölfreien Kautschuk,
Mooneyviskosität: 50 ME, bestimmt als ML1+4 (100°C) nach DIN 53 523,
Ölgehalt (TDAE-Öl): 27,5 Gewichts-%, bezogen auf ölverstreckten Kautschuk.

Die Zusammensetzungen der Kautschukmischungen sind in der nachstehenden Tabelle 1 zusammengefasst:

**Tabelle 1: Zusammensetzung der unvulkanisierten Gummimischungen (erfindungsgemäß sind die mit"* gekennzeichneten Beispiele 3* und 4*)**

| Einsatzstoffe in phr | Bsp. 1 Vergleich | Bsp. 2 Erfindungsgemäß | Bsp.3* Erfindungsgemäß | Bsp. 4* Erfindungsgemäß |
|---|---|---|---|---|
| BUNA VSL 5025-2 (nicht funktionalisiert) | 96,3 | 96,3 | 0 | 0 |
| SBR (funktionalisiert) | 0 | 0 | 97,6 | 97,6 |
| hoch-cis Polybutadien (BUNA CB 24, Lanxess Deutschland GmbH) | 30 | 30 | 30 | 30 |
| Styrol-Butadien-Kautschukgel | 0 | 15 | 0 | 15 |
| Kieselsäure (ULTRASIL 7000 GR, Evonik) | 90 | 90 | 90 | 90 |
| Ruß (VULCAN J/N375, Cabot) | 7 | 7 | 7 | 7 |
| TDAE Öl (VIVATEC 500, Hansen und Rosenthal) | 10 | 10 | 8,7 | 8,7 |
| Zinkseife (AKTIPLAST GT, RheinChemie Rheimau GmbH) | 3,5 | 3,5 | 3,5 | 3,5 |
| Stearinsäure (EDENOR C 18 98-100, Cognis Deutschland GmbH) | 1 | 1 | 1 | 1 |
| Antioxidanz (VULKANOX ® 4020/LG, Lanxess) | 2 | 2 | 2 | 2 |
| Antioxidanz (VULKANOX ® HS/LG, Lanxess) | 2 | 2 | 2 | 2 |
| Zinkoxid (ZINKWEISS ROTSIEGEL, Grillo Zinkoxid GmbH) | 2 | 2 | 2 | 2 |
| Silan nach Formel (II) (VP SI 363, Evonik) | 10,1 | 10,1 | 10,1 | 10,1 |
| Lichtschutzwachs (ANTELUX ®654, RheinChemie Rheinau GmbH) | 2 | 2 | 2 | 2 |
| Sulfonamid (VULKALENT E/C, Lanxess) | 0,2 | 0,2 | 0,2 | 0,2 |
| Schwefel (MAHLSCHWEFEL 90/95 CHANCEL®, Solvay Barium Strontium) | 2,2 | 2,2 | 2,2 | 2,2 |
| Benzothiazolsulfonamid (VULKACIT NZ/EGC, Lanxess) | 1,6 | 1,6 | 1,6 | 1,6 |
| Thiuram (RHENOGRAN TBZTD-70, RheinChemie Rheinau GmbH) | 0,29 | 0,29 | 0,29 | 0,29 |

Die oben genannten Mischungen (ohne Schwefel, Benzothiazolsulfenamid, Thiuram sowie Sulfonamid) wurden in einer ersten Mischstufe im 1,5-L Kneter insgesamt 6 Minuten gemischt, Wobei die Temperatur innerhalb von 3 Minuten von 70 auf 154°C anstieg und die Mischung 3 Minuten auf 150°C gehalten wurde. Auch die gesamte Menge des Silans würde in der L Mischstufe zugegeben.

Danach wurden die Mischungen ausgeworfen und 24 Stunden auf Raumtemperatur abgekühlt und in einer 2. Mischstufe nochmals 3 Minuten auf 150°C erwärmt. Dann wurde abgekühlt und die Mischungsbestandteile Schwefel, Benzothiazolsulfenamid, Thiuram sowie Sulfonamid anschließend auf einer Walze bei 40-60°C zugemischt.

An den unvulkanisierten Gummimischungen wurden die in Tab. 2 zusammengefassten Werte bestimmt.

**Tabelle 2: Eigenschaften der in Tab. 1 hergestellten unvulkanisierten Gummimischungen (erfindungsgemäß sind die mit"* " gekennzeichneten Beispiele 3* und 4*)**

| | Bsp. 1 | Bp. 2* | Bsp. 3* | Bsp. 4* |
|---|---|---|---|---|
| ML 1+1 (100°C) [ME] | 61,3 | 67,5 | 69,3 | 80,0 |
| ML 1+4 (100°C) [ME] | 55,6 | 61,2 | 63,2 | 73,1 |
| Moonoyrelaxation /10 sec. [%] | 21,0 | 22,0 | 22,7 | 25,3 |
| Mooneyrelaxation /30 sec. [%] | 14,6 | 15,5 | 16,3 | 18,8 |

Das Vulkanisationsverhalten der Mischungen wurde im Rheometer bei 160°C nach DIN 53 529 mit Hilfe des Monsantorheometers MDR 2000E untersucht. Auf diese Weise wurden charakteristische Daten wie Fₐ, Fₘₐₓ, Fₘₐₓ,-Fₐ, t₁₀, t₅₀, t₉₀ und t₉₅ bestimmt.

Nach DIN 53 529, Teil 3 bedeuten:
- Fₐ:: Vulkameteranzeige im Minimum der Vernetzungsisotherme
- Fₘₐₓ:: Maximum der Vulkameteranzeige
- Fₘₐₓ - Fₐ:: Differenz der Vulkameteranzeigen zwischen Maximum und Minimum
- t₁₀:: Zeit, bei der 10% des Umsatzes erreicht sind
- t₅₀:: Zeit, bei der 50% des Umsatzes erreicht sind
- t₉₀:: Zeit, bei der 90% des Umsatzes erreicht sind
- t₉₅:: Zeit, bei der 95% des Umsatzes erreicht sind

**Tabelle 3: Vulkanisationsverhalten der in Tab. 1 hergestellten Gummimischungen erfindungsgemäß sind die mit "* " gekennzeichneten, Beispiele 3* und 4*)**

| | Bsp. 1 | Bsp. 2 | Bsp. 3* | Bsp. 4* |
|---|---|---|---|---|
| Fₐ [dNm] | 2,14 | 2,62 | 1,93 | 2,70 |
| Fₘₐₓ [dNm] | 17,77 | 15,76 | 13,50 | 14,41 |
| Fₘₐₓ - Fₐ [dNm] | 15,63 | 13,14 | 11,57 | 11,71 |
| t₁₀ [sec] | 240,8 | 259,0 | 295,0 | 274,3 |
| t₅₀ [Sec] | 404,2 | 458,7 | 476,6 | 469,5 |
| t₉₀ [sec] | 721,0 | 800,8 | 855,2 | 814,7 |
| t_{9,5} [sec] | 904,7 | 1005 | 1066 | 994,3 |
| t₉₀-t₁₀ [sec] | 480,2 | 541,8 | 560,2 | 540,4 |

Die oben genannten Mischungen wurden 20 Minuten bei 160°C in der Presse vulkanisiert. An den Vulkanisaten wurden die in Tabelle 4 zusammengefassten Werte bestimmt

**Tabelle 4: Vulkanisateigenschaflen der in Tab. 1 hergestellten Gummimischungen (erfindungsgemäß sind die mit"* " gekennzeichneten Beispiele 3* und 4*)**

| | Bsp. 1 | Bsp. 2 | Bsp. 3* | Bsp. 4* |
|---|---|---|---|---|
| Shore A-Härte bei 23°C (DIN 53505) | 59,1 | 59,7 | 58,7 | 61,6 |
| Shore A Härte bei 70°C (DIN 53505) | 57,9 | 57,3 | 56,5 | 59,0 |
| Rückprallelastizät bei 23°C [%] (DIN 53512) | 40,5 | 33,0 | 40,0 | 34,5 |
| Rückprallelastizät bei 60°C [%] (DIN 53512) | 62,5 | 63,0 | 65,0 | 64,5 |
| σ₁₀ (DIN 53504) [MPa] | 0,4 | 0,4 | 0,4 | 0,4 |
| σ₂₅ (DIN 53504) [MPa] | 0,7 | 0,8 | 0,7 | 0,7 |
| σ₅₀ (DIN 53504) [MPa] | 1,1 | 1,2 | 1,1 | 1,2 |
| σ₁₀₀ (DIN 53504) [MPa] | 1,9 | 2,2 | 2,2 | 2,4 |
| σ₃₀₀ (DIN 53504) [MPa] | 10,0 | 11,0 | 13,1 | 14,7 |
| σ₃₀₀ / σ₂₅ | 14,3 | 13,8 | 18,7 | 21,0 |
| Zugfestigkeit (DIN 53504) [MPa] | 19,2 | 19,7 | 20,6 | 18,0 |
| Bruchdehnung (DIN 53504) [%] | 486 | 480 | 419 | 348 |
| Abrieb (DIN 53516) [mm³] | 86 | 84 | 77 | 70 |
| E' (0°C) / 10 Hz [MPa] | 20,2 | 25,3 | 14,6 | 23,3 |
| E" (0°C) / 10 Hz [MPa] | 6,8 | 13,3 | 7,0 | 13,5 |
| E' (60°C) / 10 Hz [MPa] | 7,6 | 5.1 | 4,9 | 4,8 |
| E" (60°C) / 10 Hz [MPa] | 0,7 | 0,5 | 0,5 | 0,4 |
| tan δ bei 0°C (dynamische Dämpfung bei 10 Hz) | 0,337 | 0,528 | 0,478 | 0,577 |
| tan δ bei 60°C (dynamische Dämpfung bei 10 Hz) | 0,096 | 0,088 | 0,093 | 0,088 |
| ΔG* (G* (0,5% Dehnung) - G* (15% Dehnung)) [MPa] (MTS bei 1 Hz, 60°C) | 0,90 | 0,53 | 0,49 | 0,42 |

Für Reifenanwendungen wird ein niedriger Rollwiderstand benötigt, der dann gegeben ist, wenn im Vulkanisat ein hoher Wert für die Rückprallelastizität bei, 60°C, ein niedriger tanδ-Wert in der dynamischen Dämpfung bei hoher Temperatur (60°C) sowie ein geringes ΔG* gemessen werden. Wie aus Tabelle, 4 ersichtlich, zeichnen sich die Vulkanisate der erfindungsgemäßen Beispiele durch höhe Rückprallelastizitäten bei 60°C, niedrige tanδ-Werte in der dynamischen Dämpfung bei 60°C sowie niedrige ΔG*-Werte aus.

Für Reifenanwendungen wird zudem eine hohe Nassrutschfestigkeit benötigt, die dann gegeben ist, wenn das Vulkanisat einen hohen tanδ-Wert in der dynamischen Dämpfung bei tiefer Temperatur (0°C) aufweist. Wie aus Tabelle 4 ersichtlich, zeichnen sich die Vulkanisate der erfindungsgemäßen Beispiele durch hohe tanδ-Werte in der dynamischen Dämpfung bei 0°C aus.

Des Weiteren ist für Reifenanwendungen eine hohe Abriebfestigkeit notwendig. Wie aus Tabelle 4 ersichtlich, zeichnen sich die Vulkanisate der erfindungsgemäßen Beispiele durch verringerte DIN-Abnebwerte aus.

## Patentansprüche

1. Kautschukinischungen, enthaltend (A) mindestens einen funktionalisierten Dienkautschuk, wobei der Dienkautschuk aus Wiederholungseinheiten auf Basis von 1,3-Butadien und Styrol besteht und mit Hydroxy- und/ oder Carboxylgruppen und/ oder deren Salzen funktionalisiert ist und (B) gegebenenfalls ein Styrol/Butadien-Kautschuhgel mit einem Quellungsindex in Toluol von 1 bis 25 und einer Teilchengröße von 5 bis 1000 nm sowie (C) ein Silan der Formel (I) 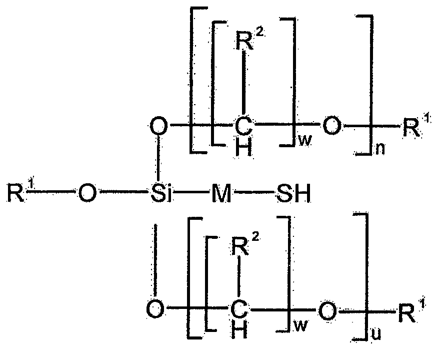 mit R¹= Wasserstoff bzw. ein Kohlenwasserstoffrest mit 1 bis 20 C-Atomen, der linear, verzweigt, aliphatisch, cycloaliphatisch und aromatisch sein und gegebenenfalls weitere Heteratome enthalten kann,
R² = Wasserstoff oder Methyl,
und M einem Spacer, der einen Kohlenwasserstoffrest mit 1 bis 20 Kohlenstoffatomen darstellt und linear, verzweigt, aliphatisch, cycloaliphatisch und aromatisch sein und gegebenenfalls weitere Heteratome enthalten kann und
n = 0 bis 25,
u= 0 bis 25,
w = 1 bis 40
und R¹, R² und/oder w innerhalb des Silans gleich oder verschieden sein können,
und (D) gegebenenfalls weitere Kautschuke, Füllstoff und Kautschukhilfsmittel.

2. Kautschukmischungen nach Anspruch 1, **dadurch gekennzeichnet, dass** der Anteil des Styrol/Butadien-Kautschukgels, bezogen auf 100 Gewichtsteile der Oesamtmenge an Kautschule, 5 bis 75 Gewichtsteile beträgt.

3. Kautschukmischungen nach seinem der Ansprüche 1 oder 2, **dadurch gekennzeichnet, dass** das Styrol/Butadien-Kautschukgel ein XSBR-Styrol/Butadien-Copolymerisat und Pfropfpolymerisat, enthaltend Hydroxyethylmethacrylat, Hydroxypropylmethacrylat, Hydroxybutylmethacrylat, Ethylenglykoldimethacrylat, Trimethylolpropantrimethacrylat und/oder Pentaerythrittetramethacrylat ist.

4. Kautschukmischungen nach einem der Ansprüche 1 bis 3, **dadurch gekennzeichnet, dass** als Silan
eine Verbindung der Formel II 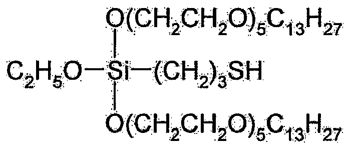 eingesetzt wird.

5. Verfahren zur Herstellung der Kautschukmischungen nach einem der Ansprüche 1 bis 4, **dadurch gekennzeichnet, dass** die Mischungsbestandteile in einer Mischapparatur bei Temperaturen von 20 - 220°C vermischt werden.

6. Verwendung der Kautschukmischungen nach einem der Ansprüche 1 bis 4 zur Herstellung von Kautschukvulkanisaten.

7. Verwendung der Kautschukmischungen nach einem der Ansprüche 1 bis 4 zur Herstellung von Reifenlaufflächen.

## Claims

1. Rubber mixtures, comprising (A) at least one functionalized diene rubber, where the diene rubber is composed of repeat units based on 1,3-butadiene and styrene and has been functionalized with hydroxy groups and/or with carboxy groups and/or with salts thereof and (B) optionally a styrene/butadiene rubber gel with a swelling index in toluene of from 1 to 25 and with a particle size of from 5 to 1000 nm, and also (C) a silane of the formula (I) 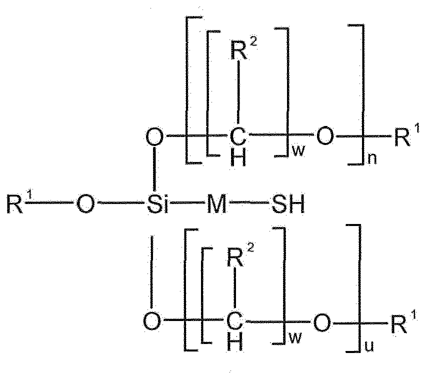 where R¹= hydrogen or a hydrocarbon moiety having from 1 to 20 carbon atoms, which can be linear, branched, aliphatic, cycloaliphatic or aromatic and which can optionally contain further heteroatoms,
R² = hydrogen or methyl,
and M is a spacer which can contain a hydrocarbon moiety having from 1 to 20 carbon atoms and can be linear, branched, aliphatic, cycloaliphatic or aromatic and which can optionally contain further heteroatoms, and
n = from 0 to 25,
u= from 0 to 25,
w = from 1 to 40
and R¹, R² and/or w can, within the silane, be identical or different,
and (D) optionally further rubbers, fillers and rubber auxiliaries.

2. Rubber mixtures according to Claim 1, **characterized in that** the proportion of the styrene/butadiene rubber gel, based on 100 parts by weight of the total amount of rubber, is from 5 to 75 parts by weight.

3. Rubber mixtures according to either of Claims 1 and 2, **characterized in that** the styrene/butadiene rubber gel is an XSBR-styrene/butadiene copolymer or graft polymer, containing hydroxyethyl methacrylate, hydroxypropyl methacrylate, hydroxybutyl methacrylate, ethylene glycol dimethacrylate, trimethylolpropane trimethacrylate and/or pentaerythritol tetramethacrylate.

4. Rubber mixtures according to one of Claims 1 to 3, **characterized in that**, as silane, a compound of the formula II 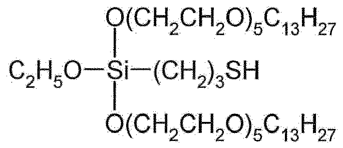 is used.

5. Process for the production of the rubber mixtures according to one of Claims 1 to 4, **characterized in that** the mixture constituents are mixed at temperatures of from 20 to 220°C in a mixing apparatus.

6. Use of the rubber mixtures according to one of Claims 1 to 4 for the production of rubber vulcanizates.

7. Use of the rubber mixtures according to one of Claims 1 to 4 for the production of tyre treads.

## Revendications

1. Mélanges de caoutchouc, contenant (A) au moins un caoutchouc diénique fonctionnalisé, le caoutchouc diénique étant constitué d'unités de répétition à base de 1,3-butadiène et de styrène, et étant fonctionnalisé avec des groupes hydroxy et/ou carboxyle et/ou leurs sels, et (B) éventuellement un gel de caoutchouc de styrène/butadiène présentant un indice de gonflement dans le toluène de 1 à 25 et une taille de particule de 5 à 1 000 nm, ainsi que (C) un silane de formule (I) 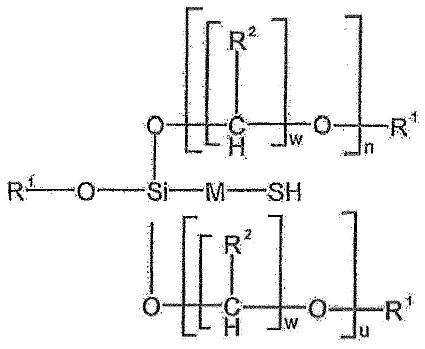 avec R¹ = hydrogène ou un radical hydrocarboné contenant 1 à 20 atomes C, qui peut être linéaire, ramifié, aliphatique, cycloaliphatique et aromatique et qui peut éventuellement contenir des hétéroatomes supplémentaires,
R² = hydrogène ou méthyle,
et M représentant un espaceur, qui est un radical hydrocarboné contenant 1 à 20 atomes de carbone, et qui peut être linéaire, ramifié, aliphatique, cycloaliphatique et aromatique et qui peut éventuellement contenir des hétéroatomes supplémentaires, et
n = 0 à 25,
u = 0 à 25,
w = 1 à 40,
et R¹, R² et/ou w dans le silane pouvant être identiques ou différents,
et (D) éventuellement d'autres caoutchoucs, charges et adjuvants de caoutchouc.

2. Mélanges de caoutchouc selon la revendication 1, **caractérisés en ce que** la proportion du gel de caoutchouc de styrène/butadiène, par rapport à 100 parties en poids de la quantité totale de caoutchouc, est de 5 à 75 parties en poids.

3. Mélanges de caoutchouc selon l'une quelconque des revendications 1 ou 2, **caractérisés en ce que** le gel de caoutchouc de styrène/butadiène est un copolymère de styrène/butadiène XSBR et un polymère greffé contenant du méthacrylate d'hydroxyéthyle, du méthacrylate d'hydroxypropyle, du méthacrylate d'hydroxybutyle, du diméthacrylate d'éthylène glycol, du triméthacrylate de triméthylolpropane et/ou du tétraméthacrylate de pentaérythrite.

4. Mélanges de caoutchouc selon l'une quelconque des revendications 1 à 3, **caractérisés en ce qu'**un composé de formule II 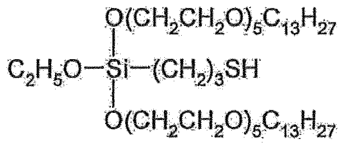 est utilisé en tant que silane.

5. Procédé de fabrication des mélanges de caoutchouc selon l'une quelconque des revendications 1 à 4, **caractérisé en ce que** les constituants du mélange sont mélangés dans un appareil de mélange à des températures de 20 à 220 °C.

6. Utilisation des mélanges de caoutchouc selon l'une quelconque des revendications 1 à 4 pour la fabrication de vulcanisats de caoutchouc.

7. Utilisation des mélanges de caoutchouc selon l'une quelconque des revendications 1 à 4 pour la fabrication de bandes de roulement de pneus.
